# EUROPEAN PATENT APPLICATION

(11) **EP 4 683 011 A1**
(43) Date of publication of application: **21.01.2026**
(21) Application number: 24188796.7
(22) Date of filing: 16.07.2024
(51) Int. Cl.: H01M 8/04119, H01M 8/04664, H01M 8/0438

(54) **AIR PROCESSING UNIT, FUEL CELL ASSEMBLY AND FUEL CELL VEHICLE**

(71) Applicant: VOLVO TRUCK CORPORATION, 405 08 Göteborg (SE)
(72) Inventor: MERSS, Felipe, 417 65 Göteborg (SE); ARYA, Pranav, 412 85 Göteborg (SE); MARCON JUNIOR, Simao, 423 37 Göteborg (SE)
(74) Representative: Valea AB

(57) **Abstract**

A fuel cell assembly for a fuel cell vehicle is provided that comprises an enclosure comprising a fuel cell stack, and an air processing unit, and a fuel cell controller comprising processing circuitry configured to monitor and control operation of the fuel cell assembly. The air processing unit comprises a humidifier housing comprising respective ports configured to receive a first flow of compressed air, provide a second flow of humidified compressed air to the fuel cell stack, receive a third flow of exhaust air expelled from the fuel cell stack, and provide a fourth flow of dehumidified exhaust air. The housing is configured to seat therein two or more humidifier membrane cartridge modules that are removable and replaceable. A removable cover is configured to be coupled to the housing, the cover comprising at least one closable opening configured to be opened to provide access to an interior of the housing.

## Description

### TECHNICAL FIELD

The disclosure relates to an air processing unit configured to seat therein two or more humidifier membrane cartridge modules that are individually replaceable. The disclosure also relates to a fuel cell assembly comprising the air processing unit and to a fuel cell vehicle comprising the fuel cell assembly.

The disclosure can be applied in heavy-duty vehicles, such as trucks, buses, and construction equipment. Although the disclosure may be described with respect to a particular vehicle, the disclosure is not restricted to any particular vehicle.

### BACKGROUND

In a fuel cell vehicle, a fuel cell system or assembly typically comprises one or more, typically hundreds, of fuel cells assembled into a fuel cell stack for generating power supplied to the vehicle. A fuel cell is an electrochemical cell which converts the chemical energy of a fuel, typically hydrogen, and an oxidizing agent, typically oxygen or air, into electrical energy. Fuel cells are considered a promising, more environmentally friendly alternative, compared to conventional internal combustion engines. Thus, fuel cells are increasingly considered for powering electric vehicles, such as pure electric vehicles and hybrid electric vehicles.

Large fuel cell vehicles, e.g., trucks, require either multiple or relatively big and powerful fuel cell systems. From a packaging perspective, such as a way in which components are arranged in the fuel cell vehicle, one or in some cases two individual fuel cell systems have been a more preferred implementation than multiple fuel cell systems.

A fuel cell assembly or system comprises various balance-of-plant components, one of the key components of which is an air processing unit that is configured to process an air flow delivered to a cathode side of the fuel cell stack. The air processing unit comprises a humidification membrane for humidifying the air before it is delivered to the fuel cell stack. The membrane, like some of the other components of the fuel cell system, may be a service part that is replaced after a certain number of operating hours.

Components in a fuel cell vehicle may be arranged such that servicing the fuel cell vehicle, such as a truck, may be a time- and labor-consuming process. For example, it may be challenging to access a component or part for maintenance and/or service. As another issue, components that are on the way of the part that is being replaced or repaired may need to be taken out.

Accordingly, there exists a need for improved ways to arrange components in the fuel cell vehicles that would allow for easier maintenance and service.

### SUMMARY

Accordingly, an air processing unit, a fuel cell assembly comprising the air processing unit, and a fuel cell vehicle comprising the fuel cell assembly are provided in which the air processing unit is configured to seat two or more humidifier membrane cartridge modules or membrane cartridges that are individually removable and replaceable. Thus, two or more smaller humidifier membranes are used instead of a larger membrane unit. The two or more humidifier membrane cartridge modules are positioned in a housing that may be accessible from underneath the vehicle.

According to an aspect of the disclosure, a fuel cell system or assembly for a fuel cell vehicle is provided that comprises an enclosure comprising a fuel cell stack, an air processing unit, and a fuel cell controller comprising processing circuitry configured to monitor and control operation of the fuel cell assembly. The air processing unit comprises a humidifier housing comprising a first inlet port configured to receive a first flow of compressed air, a first outlet port configured to provide a second flow of humidified compressed air to the fuel cell stack, a second inlet port configured to receive a third flow of exhaust air expelled from the fuel cell stack, and a second outlet port configured to provide a fourth flow of dehumidified exhaust air, the humidifier housing being configured to removably seat therein two or more humidifier membrane cartridge modules; and a removable cover configured to be coupled to the housing, the cover comprising at least one closable opening that is configured to be opened to provide access to an interior of the housing.

Technical benefits of using a number of smaller, modular membrane cartridges that are individually replaceable instead of a single bigger and typically more expensive membrane, include easier, less costly, and faster service and maintenance of the air processing unit. A single air processing unit occupies quite a large space and other components of the vehicle typically need to be removed to gain access to the air processing unit. In some cases, one or more of a vehicle front axle, front suspension components, and stone chip protection shields need to be removed during servicing the air processing unit. The aspects of the present invention alleviate this issue since a smaller number of vehicle components may need to be removed from the vehicle to gain access to a humidifier housing including the two or more humidifier membrane cartridge modules. In some implementations, the humidifier housing may be configured and positioned such that there may be no need to remove any components to gain access to the housing to change a membrane cartridge. Furthermore, a state of health, or health or status, of each of the humidifier membrane cartridge modules may be monitored and used to determine when that humidifier membrane cartridge module needs to be replaced. The service costs may thus advantageously be reduced by removing and replacing only a faulty membrane cartridge module.

Thus, the configuration of the air processing unit and of the humidifier membrane cartridge modules in accordance with aspects of the present disclosure may greatly improve serviceability and reduce costs of maintenance and repair of the air processing unit of the fuel assembly of the vehicle. This in turn may reduce service costs and time of the vehicle. In cases in which the vehicle is part of the fleet, service costs for the entire fleet may be reduced.

In some examples, the housing of the air processing unit comprises the two or more humidifier membrane cartridge modules, wherein each of the humidifier membrane cartridge modules is removable and replaceable.

In some examples, each of the humidifier membrane cartridge modules comprises: an exterior frame having enclosed top and bottom walls, and sidewalls each having a corresponding opening; a membrane body positioned inside the exterior frame such that the membrane body is exposed through the openings in the sidewalls of the exterior frame; and at least one sealing member disposed around at least a portion of an outer perimeter of the exterior frame, the sealing member being configured to sealably mate with a corresponding sealing member of another humidifier membrane cartridge module of the at least two humidifier membrane cartridge modules.

In some examples, an inner bottom wall of the housing comprises at least one receiving feature configured to slidably engage with at least one engagement member formed on each of the humidifier membrane cartridge modules.

In some examples, the air processing unit comprises a first pressure sensor positioned so as to measure an air pressure of an airflow entering a humidifier membrane cartridge module of the two or more humidifier membrane cartridge modules and a second pressure sensor positioned so as to measure an air pressure of an airflow exiting the humidifier membrane cartridge module.

In some examples, the processing circuitry of the fuel cell controller may be configured to determine a state of health of the humidifier membrane cartridge module, optionally using measurements acquired by the first and second pressure sensors.

In some examples, the processing circuitry of the fuel cell controller may be configured to generate an indication indicating one or more of the state of health of the humidifier membrane cartridge module and an instruction to replace the humidifier membrane cartridge module when the state of health of the humidifier membrane cartridge module differs from an expected state of health of the humidifier membrane cartridge module.

In some examples, the air processing unit is positioned below the enclosure comprising the fuel cell stack.

According to an aspect of the disclosure, a fuel cell vehicle is provided that comprises a fuel cell assembly comprising an enclosure comprising a fuel cell stack, an air processing unit, and a fuel cell controller comprising processing circuitry configured to monitor and control operation of the fuel cell assembly. The air processing unit comprises a humidifier housing and a removable cover configured to be coupled to the housing. The humidifier housing comprises a first inlet port configured to receive a first flow of compressed air, a first outlet port configured to provide a second flow of humidified compressed air to the fuel cell stack, a second inlet port configured to receive a third flow of exhaust air expelled from the fuel cell stack, and a second outlet port configured to provide a fourth flow of dehumidified exhaust air, the humidifier housing being configured to removably seat therein two or more humidifier membrane cartridge modules. The cover comprises at least one closable opening that is configured to be opened to provide access to an interior of the housing.

Advantages and effects of the fuel cell vehicle are largely analogous to the advantages and effects of the fuel cell system according to the examples herein. Further, all embodiments of the fuel cell vehicle are applicable to and combinable with all embodiments of the fuel cell system according to the examples herein, and vice versa.

In some examples, the housing comprises the two or more humidifier membrane cartridge modules, wherein each of the humidifier membrane cartridge modules is removable and replaceable.

In some examples, each of the humidifier membrane cartridge modules comprises an exterior frame having enclosed top and bottom walls, and sidewalls each having a corresponding opening; a membrane body positioned inside the exterior frame such that the membrane body is exposed through the openings in the sidewalls of the exterior frame; and at least one sealing member disposed around at least a portion of an outer perimeter of the exterior frame, the sealing member being configured to sealably mate with a corresponding sealing member of another humidifier membrane cartridge module of the at least two humidifier membrane cartridge modules.

In some examples, the air processing unit comprises a first pressure sensor positioned so as to measure an air pressure of an airflow entering a humidifier membrane cartridge module of the two or more humidifier membrane cartridge modules and a second pressure sensor positioned so as to measure an air pressure of an airflow exiting the humidifier membrane cartridge module.

In some examples, the processing circuitry of the controller is configured to determine a state of health of the humidifier membrane cartridge module, optionally using measurements acquired by the first and second pressure sensors; and generate an indication indicating one or more of the state of health of the humidifier membrane cartridge module and an instruction to replace the humidifier membrane cartridge module when the state of health of the humidifier membrane cartridge module differs from an expected state of health of the humidifier membrane cartridge module.

In some examples, the air processing unit is positioned below the enclosure comprising the fuel cell stack.

According to an aspect of the disclosure, an air processing unit configured to be installed in a fuel cell vehicle for processing air delivered to a fuel cell stack of a fuel cell assembly is provided. The air processing unit comprises a housing comprising a first inlet port configured to receive a first flow of compressed air, a first outlet port configured to provide a second flow of humidified compressed air to the fuel cell stack, a second inlet port configured to receive a third flow of exhaust air expelled from the fuel cell stack, and a second outlet port configured to provide a fourth flow of dehumidified exhaust air, the housing being configured to removably seat therein two or more humidifier membrane cartridge modules; and a removable cover configured to be coupled to the housing, the cover comprising at least one closable opening that is configured to be opened to provide access to an interior of the housing. The closable opening may be positioned so that, when the air processing unit is installed in the fuel cell vehicle, the closable opening is accessible from underneath the vehicle.

Advantages and effects of the air processing unit are largely analogous to the advantages and effects of the fuel cell system according to the examples herein. Further, all embodiments of the air processing unit are applicable to and combinable with all embodiments of the fuel cell system according to the examples herein, and vice versa.

In some aspects, a method for determining when to replace a humidifier membrane cartridge module out of two or more humidifier membrane cartridge modules seated in a humidifier housing of an air processing unit installed in a fuel cell vehicle is provided. The air processing unit is configured to seat two or more humidifier membrane cartridge modules or membrane cartridges that are individually removable and replaceable, in accordance with examples herein. The air processing unit may comprise a humidifier housing comprising a first inlet port configured to receive a first flow of compressed air, a first outlet port configured to provide a second flow of humidified compressed air to the fuel cell stack, a second inlet port configured to receive a third flow of exhaust air expelled from the fuel cell stack, and a second outlet port configured to provide a fourth flow of dehumidified exhaust air, the humidifier housing being configured to removably seat therein two or more humidifier membrane cartridge modules; and a removable cover configured to be coupled to the housing, the cover comprising at least one closable opening that is configured to be opened to provide access to an interior of the housing.

The method may be performed, e.g., by a fuel cell controller and/or by a vehicle controller. The method may comprise receiving pressure sensor measurements acquired by one or more pressure sensors configured to measure air pressure of air flows respectively entering and exiting each of the two or more humidifier membrane cartridge modules; determining a state of health of the humidifier membrane cartridge module; generating an indication indicating the determined state of health of the humidifier membrane cartridge module; optionally determining whether a condition of the humidifier membrane cartridge module e.g. the determined state of health of the humidifier membrane cartridge module differs from an expected state of health of the humidifier membrane cartridge module; responsive to determining that the determined state of health of the humidifier membrane cartridge module differs from the expected state of health of the humidifier membrane cartridge module, generating an indication comprising an instruction to replace the humidifier membrane cartridge module; and sending the indication comprising an instruction to replace the humidifier membrane cartridge module, e.g., to the main vehicle controller and/or to another device or system.

Technical benefits of the method include improved, such as e.g. faster and less costly, servicing of the humidifier of the air processing unit. Because it is known which humidifier membrane cartridge module is to be replaced, a technician or other person may perform more targeted actions to remove and replace only the humidifier membrane cartridge module that need to be replaced. The air processing unit is configured in accordance with examples of the present disclosure, and it is therefore faster to replace the particular humidifier membrane cartridge module, out of two or more humidifier membrane cartridge modules installed in the humidifier housing the air processing unit. As discussed above, the humidifier housing is configured and positioned such that there may be no need to remove any large components to gain access to the housing to change a membrane cartridge. In some cases, a number of components that will need to be removed to gain access to the inside of the humidifier housing may be reduced.

According to an aspect of the disclosure, a computer program product is provided that comprises computer-executable instructions, which, when executed by processing circuitry, cause the processing circuitry to perform the method according any one or more examples in accordance with aspects of the present disclosure.

Advantages and effects of the computer program product are largely analogous to the advantages and effects of the method according to the examples herein. Further, all embodiments of the computer program product are applicable to and combinable with all embodiments of the method according to the examples herein, and vice versa.

According to an aspect of the disclosure, a computer-readable storage medium is provided, the computer-readable storage medium having stored thereon a computer program product comprising computer-executable instructions which, when executed by processing circuitry, cause the processing circuitry to perform the method according to any one or more examples in accordance with aspects of the present disclosure.

Advantages and effects of the computer-readable storage medium are largely analogous to the advantages and effects of the method according to the examples herein. Further, all embodiments of the computer-readable storage medium are applicable to and combinable with all embodiments of the method according to the examples herein, and vice versa.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control systems, units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** **is** a diagram illustrating a side view of an example of a fuel cell vehicle.
**FIG. 2** **is** a diagram illustrating a bottom view of the fuel cell vehicle of FIG. 1.
**FIG. 3** **is** a diagram illustrating an example of a fuel cell assembly of the fuel cell vehicle of FIG. 1, in accordance with examples of the present disclosure.
**FIGs. 4A** and **4B** are diagrams illustrating examples of different positions of a closable opening in a cover of a humidifier housing of an air processing unit of the fuel cell assembly of FIG. 3, in accordance with examples of the present disclosure.
**FIG. 5A** is a diagram illustrating schematically an example of three humidifier membrane cartridge modules, in accordance with examples of the present disclosure.
**FIG. 5B** is another diagram illustrating schematically an example of three humidifier membrane cartridge modules, in accordance with examples of the present disclosure.
**FIG. 6** is a diagram illustrating a top cross-section of three humidifier membrane cartridge modules, in accordance with examples of the present disclosure.
**FIG. 7A** is a diagram illustrating a side cross-section along a length of a humidifier housing comprising three humidifier membrane cartridge modules, in accordance with examples of the present disclosure.
**FIG. 7B** is a diagram illustrating a side cross-section along a width of the humidifier housing of FIG. 7A.
**FIG. 8** is a flowchart illustrating a method for determining when to replace a humidifier membrane cartridge module, in accordance with examples of the present disclosure.

### DETAILED DESCRIPTION

Aspects set forth below represent the necessary information to enable those skilled in the art to practice the disclosure.

In examples herein, an air processing unit, a fuel cell assembly comprising the air processing unit, and a fuel cell vehicle comprising the fuel cell assembly are provided, wherein the air processing unit is configured to include two or more humidifier membrane cartridge modules that are individually removable and replaceable. Each of the modules is smaller than a larger humidifier membrane that need to be replaced as a single unit which may require removal of a number of other components of the vehicle before the larger humidifier membrane is accessed by a person performing servicing of the air processing unit. Accordingly, advantages provided by the present disclosure include a less labor-intensive, faster, and less costly maintenance of the air processing unit. In this way, a fuel cell vehicle may be easier and cheaper to service which may prolong a useful life of the vehicle.

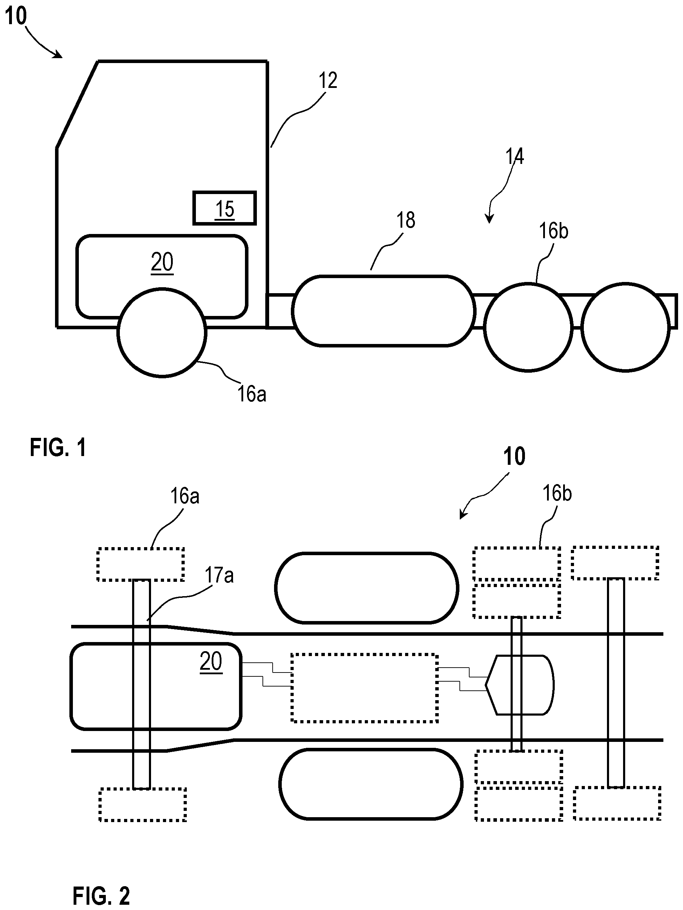

**FIG. 1** illustrates a side view of an example of a fuel cell vehicle 10 comprising a fuel cell system or assembly 20 in which an air processing unit in accordance with aspects of the present disclosure may be included. The vehicle 10 is shown as a truck, such as a heavy-duty truck. The vehicle 10 may comprise a cabin or cab 12 and a body or frame 14 configured to have attached thereto one or more trailers of any configuration. The cab 12 may comprise a driver compartment (not shown). As also shown in FIG. 1, the vehicle 10 comprises a control system or main vehicle controller 15 that is configured to control operations of various components of the vehicle 10. The vehicle 10 may comprise more than one controller, and some of the components of the vehicle 10 may have their own controllers configured to operably communicate with the main vehicle controller 15. For example, as discussed in more detail below, the fuel cell assembly 20 may comprise a fuel cell controller configured to operably communicate with the main vehicle controller 15.

The body 14 of the vehicle 10 may thus designate a structure behind the cab 12, such as the structure that is supported or towed by the vehicle 10. The vehicle 10 comprises two or more sets of wheels, with the two out of three sets depicted in FIG. 1 being labeled as 16a, 16b.

It should be appreciated that the present disclosure is not limited to this, or any other specific type of vehicle, and may be used in any other type of vehicle, such as a refuse collector, bus, construction equipment, e.g. a wheel loader and an excavator, and a passenger car. The vehicle may be a light-duty, a medium-duty, or a heavy-duty vehicle.

The vehicle 10 may be an autonomous vehicle, i.e. a self-driving vehicle, and/or the vehicle 10 may be arranged to be operated by a driver. The driver may be an on-board driver and/or an off-board driver which controls the vehicle from a remote location.

The fuel cell assembly 20 may comprise a fuel cell stack (not shown in FIG. 1) configured to receive fuel, such as hydrogen, and oxidant, such as air or oxygen, and to electrochemically covert the hydrogen and air or oxygen into electrical energy. FIG. 1 shows that the fuel cell vehicle 10 may comprise one or more hydrogen storage containers or tanks 18. The vehicle 10 comprises various other components not shown in FIG. 1.

As shown schematically in **FIG. 2****,** the fuel cell system or assembly 20 may be positioned in the vehicle 10, e.g., in the cab 12, though the specific position of the fuel cell assembly 20 within the vehicle may vary. In any case, in some examples, the fuel cell assembly 20 may be positioned such that it is accessible from underneath the vehicle 10. During servicing the fuel cell assembly 20, to gain access to its internal components, e.g. to an air processing unit, it may be required to temporarily remove vehicle components that are on the way to the fuel cell assembly 20. For example, in some implementation, a vehicle front axle 17a, shown in FIG. 2, may need to be removed for a service technician or another person to gain access to the fuel cell assembly 20. There may be other components in the vehicle 10, e.g., front suspension components, stone chip protection shields, etc. that may need to be removed before the technician can gain sufficient access to the fuel cell assembly 20 to, for example, change a membrane of a humidifier of the air processing unit.

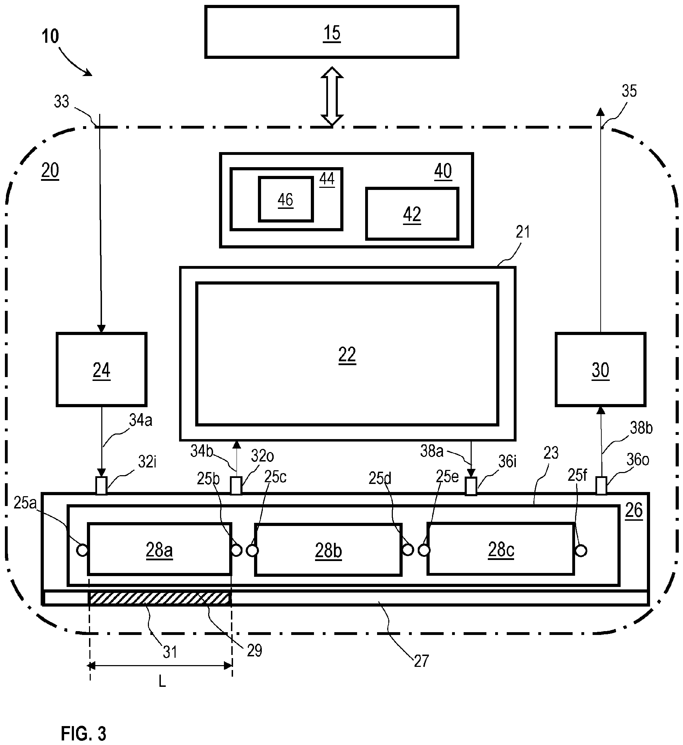

**FIG. 3** depicts an example of the fuel cell assembly 20 of the fuel cell vehicle 10, wherein the fuel cell assembly 20 comprises a compartment or enclosure 21 comprising a fuel cell stack 22. The fuel cell assembly 20 also comprises an air compressor 24, an air processing unit 26, and an exhaust system 30. It should be noted that boundaries of the fuel cell assembly 20 are schematically shown with a dot-dashed line for illustration purposes only and not to show any actual enclosure. The air processing unit 26 comprises a humidifier housing 23, and a cover 27 configured to be coupled to the housing 23, and a fuel cell controller 40 comprising processing circuitry 42 configured to monitor and control operation of the fuel cell assembly 20 comprising the fuel cell stack 22 and the air processing unit 26. The air processing unit 26 may be positioned below the enclosure 21 comprising the fuel cell stack. As used herein, the term "below" is defined as below in the direction of gravity when the air processing unit 26 is installed in the vehicle. There may be other components between the fuel cell stack 22 and the air processing unit 26. Also, below does not necessarily mean directly below, as the air processing unit 26 may be horizontally displaced relative to the enclosure 21.

The air processing unit 26 is configured to removably seat therein, in the humidifier housing 23, two or more humidifier membrane cartridge modules shown as first, second, and third humidifier membrane cartridge modules 28a, 28b, 28c horizontally adjacent to one another. The humidifier membrane cartridge modules 28a, 28b, 28c are seated along a length or longitudinal axis of the humidifier housing 23. In some examples, the humidifier membrane cartridge modules 28a, 28b, 28c may be slidably received within the humidifier housing 23.

The three humidifier membrane cartridge modules 28a, 28b, 28c are shown by way of example, as, in some implementations, the humidifier housing 23 may be configured to include two or more than three humidifier membrane cartridge modules. Examples herein are not limited to a specific number of humidifier membrane cartridge modules that the humidifier housing is configured to include, though there are at least two humidifier membrane cartridge modules. The humidifier membrane cartridge modules 28a, 28b, 28c may have a rectangular cross-section. In some examples, a height of a humidifier membrane cartridge module may be greater than the module's width and length. In some examples, the length of a humidifier membrane cartridge module may be greater than the module's height and width. In some examples, the humidifier membrane cartridge modules may have a cylindrical or generally cylindrical shape, or they may have another shape. Regardless of their specific shape, the two or more modules are configured to be reversibly coupled to another so that in use the two or more modules operate as one unit, even though they are individually replaceable.

The cover 27 of the air processing unit 26 comprises at least one closable opening 29 that is configured to be opened to provide access to an interior of the housing 23. The closable opening 29 in the cover 27 may be positioned so that it is accessible from underneath the vehicle 10. The closable opening 29 may be covered with a service lid or another closing structure or element shown by way of example as a service lid 31 in FIG. 3. The service lid 31 or another closing structure may be hinged, slidable, removable or it may be otherwise configured to be reversibly opened during maintenance and/or repair of the air processing unit 26 of the vehicle 10. The service lid 31 or another closing structure has a size that corresponds to a size of the closable opening 29.

A size e.g. an area of the closable opening 29, in an open configuration, may be smaller than or equal to an area of a largest cross-section of the at least two humidifier membrane cartridge modules. As an example, FIG. 3 shows schematically than e.g. a length L of the closable opening 29 may be smaller or equal to a length of a humidifier membrane cartridge module e.g., membrane cartridge module 28a. The humidifier membrane cartridge modules have the same size. In some examples, the area of the closable opening 29 is smaller than an area of a largest cross-section of two humidifier membrane cartridge modules. In some examples, the area of the closable opening 29 is equal to or smaller than an area of a largest cross-section of one humidifier membrane cartridge module. Thus, in some examples, the area of the closable opening 29 may be just enough so as to allow a humidifier membrane cartridge module to be reached from outside of the humidifier housing 23, accessed to be taken out of the housing 23 via the opening 29, and replaced with a new membrane cartridge module. If more than one membrane cartridge module need to be removed, they may be removed one-by-one.

In configurations of the cover 27 in which there are more than one closable openings 29 formed in the cover 27, a size of each of the openings may be just enough to fit one humidifier membrane cartridge module therethrough. A service technician may thus be able to access the humidifier housing 23 e.g. from underneath the vehicle 10, open the opening 29 and to replace one or more humidifier membrane cartridge modules. Different openings may be used to access the humidifier membrane cartridge modules positioned in the humidifier housing 23, depending on which one or more of the humidifier membrane cartridge modules need to be replaced.

Accordingly, in examples herein, the interior of the humidifier housing 23 is accessible only through the opening 29 which is smaller than a size of all of the membrane cartridge modules seated in the humidifier housing 23. A service technician may be able to access the humidifier housing 23 e.g. from underneath the vehicle 10, by opening the lid 31 or another structure reversibly enclosing the opening. The humidifier membrane cartridge modules may be replaced one-by-one. If more than one closable openings are formed in the cover 27, access will be required only to the opening that is closest to a humidifier membrane cartridge module to be replaced. Thus, due to the configuration of the air processing unit 26 and the use of a certain number of smaller humidifier membrane cartridge modules, only a small number of vehicle components may need to be removed to gain access to the housing 23 to change a membrane cartridge module. A front axle of the vehicle and other large vehicle component will not need to be removed, which facilitates the service and maintenance of the air processing unit 26, as well as allows increasing speed and reducing costs of the service and maintenance.

In some examples, the cover 27 may be a removable and replaceable cover, such that different type of covers may be coupled to the humidifier housing 23 depending e.g. on a type of the vehicle, a configuration of vehicle components in the vicinity of the air processing unit 26, and other factors. The types of the cover 27 may differ by a specific position of a closable opening formed through the cover 27. In such implementations, the cover 27 may be removed only during installation of the air processing unit 26, and not as part of service and maintenance of the air processing unit 26.

As shown in FIG. 3, the humidifier housing 23 comprises a first inlet port 32i configured to receive, from the air compressor 24, a first flow of compressed air 34a, a first outlet port 32o configured to provide a second flow of humidified compressed air 34b to the fuel cell stack 22. The humidifier housing 23 also comprises a second inlet port 36i configured to receive a third flow of exhaust air 38a expelled from the fuel cell stack 22, and a second outlet port 36o configured to provide a fourth flow of dehumidified exhaust air 38b e.g. to the exhaust system 30. The housing 23 is configured to removably seat therein two or more, such as three in this example, humidifier membrane cartridge modules 28a-28c.

It should be noted that the first inlet port 32i, the first outlet port 32o, the second inlet port 36i, and the second outlet port 36o may be positioned in any suitable way relative to one another. The humidifier housing 23 may have a suitable configuration that facilitates delivering air flows inside the housing 23 and carrying air flows away from the housing 23.

The air compressor 24 may receive an air flow, shown by an arrow 33, from an ambient environment, and the air flow 33 is compressed in the air compressor 24 so that a first flow of compressed air 34a is generated. The first flow of compressed air 34a is humidified as it passes through the humidifier membrane cartridge modules 28a-28c of the air processing unit 26, and the second flow of humidified compressed air 34b is supplied to a cathode side of the fuel cell stack 22. The electrochemical reaction between the air or oxygen in the second flow of humidified compressed air 34b supplied to the cathode side, and hydrogen supplied to an anode side (not shown) results in generation of electrical energy or power, as well as in production of exhaust flow as a byproduct of the electrochemical reaction. The exhaust flow may comprise liquid water, steam, and heat. The exhaust flow, comprising wet air and referred to herein as the third flow of exhaust air 38a, is directed from the fuel cell stack 22 e.g., from the cathode side, to the air processing unit 26 to pass through the humidifier membrane cartridge modules 28a-28c to thereby humidify the first flow of compressed air 34a which is thus transformed into the second flow of humidified compressed air 34b that is output from the air processing unit 26. The third flow of exhaust air 38a is dehumidified as it passes through the humidifier membrane cartridge modules 28a-28c, and the air processing unit 26 outputs the fourth flow of dehumidified exhaust air 38b to the exhaust system 30 which can further process and the fourth flow of dehumidified exhaust air 38b and which can output an exhaust flow to the environment, as shown schematically by an arrow 35 in FIG. 3.

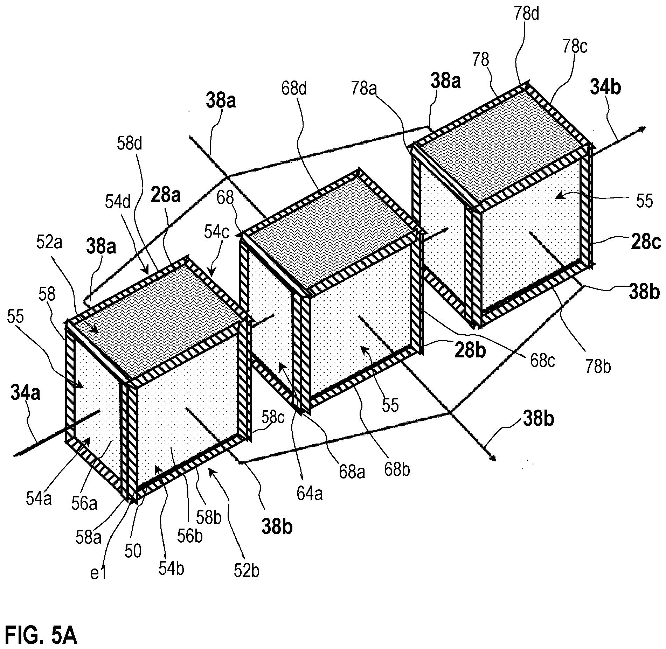

**FIG. 5A** is another schematic illustration of the humidifier membrane cartridge modules 28a-28c of the air processing unit 26, showing the first flow of compressed air 34a received from the air compressor, the second flow of humidified compressed air 34b that is supplied to the fuel cell stack, the third flow of exhaust air 38a comprising steam received from the fuel cell stack, and the fourth flow of dehumidified exhaust air 38b supplied to the exhaust system.

It should be noted that FIG. 5A shows the humidifier membrane cartridge modules 28a-28c separated from one another for illustration purposes only, since in use they are positioned horizontally in the humidifier housing 23 adjacent to one another so that the space between them is sealed using e.g. gaskets or other types of sealing members. The humidifier membrane cartridge modules 28a-28c are seated in the humidifier housing 23 longitudinally along the same axis. The sealing members may be separate elements coupled to the frame of the humidifier membrane cartridge modules.

In some examples, at least one sealing member of a humidifier membrane cartridge module may be or may comprise one or more locks, fasteners, and/or other structures configured to reversibly engage with corresponding structures of another humidifier membrane cartridge module. In some example, the at least one sealing member may be in the form of one or more LegoO-like components configured to reversibly engage with corresponding one or more LegoO-like components of another humidifier membrane cartridge module. The at least one sealing member is configured to engage at least one another sealing member in the manner so that an airtight seal is created therebetween and thus between the respective humidifier membrane cartridge modules.

FIG. 5A also shows in more detail an example of a configuration of a humidifier membrane cartridge module in accordance with examples of the present disclosure. Thus, as shown for the humidifier membrane cartridge module 28a, referred to as first in this disclosure, it comprises an exterior frame 50 having an enclosed top wall 52a and an enclosed bottom wall 52b (obscured in FIG. 5A), and sidewalls each having a corresponding opening. The humidifier membrane cartridge module 28a is rectangular in cross section.

In this example, the humidifier membrane cartridge module 28a comprises four sidewalls 54a, 54b, 54c, 54d, two of which, sidewalls 54a and 54b being visible in FIG. 5A, and two sidewalls 54c, 54d being obscured. Each of the first, second, third, and fourth sidewalls 54a, 54b, 54c, 54d has a corresponding opening; and openings 56a, 56b in the first and second sidewalls 54a, 54c are shown in FIG. 5A. The exterior frame 50 is relatively rigid and provides support to the humidifier membrane cartridge module. The exterior frame 50 may be made of plastic e.g. fibre-reinforced polymer, or another suitable material. The openings may be formed by the structure of the frame 50. The humidifier membrane cartridge module 28a also comprises a membrane body 55, marked with a dotted pattern in FIG. 5A, which is positioned inside the exterior frame 50 such that the membrane body 55 is exposed through the openings in the sidewalls of the exterior frame 50.

In some examples, the membrane body 55 may be formed from hollow fibers or tubes. In some examples, an inner diameter of the hollow fibers/tubes may be between 0.4 mm and 1 mm, though the inner diameter is not limited to a specific dimension. The hollow fibers or tubes may be formed from a suitable material, such as, e.g., polyetherimide (PEI), polyimide (PI), polyamide-imide (PAI), polysulfone, polyethersulfone, or a combination thereof. The membrane body 55 may have any suitable structure and it may be formed from any one or more suitable materials.

In examples herein, the air processing unit 26 achieves humidification of the fuel cell stack 22 by supplying moisture and heat in the exhaust air discharged from the fuel cell stack 22 to dry air acquired from the outside, through the membrane body 55. The air processing unit 26 thus also helps maintaining a temperature of the fuel cell stack 22 within a required range.

The humidifier membrane cartridge module 28a also comprises at least one sealing member 58 such as e.g. a gasket or another sealing disposed around at least a portion of an outer perimeter of the exterior frame 50, the sealing member 58 being configured to sealably mate with a corresponding sealing member of another humidifier membrane cartridge module of the at least two humidifier membrane cartridge modules. The sealing member 58 e.g. a gasket may be coupled to edges of the outer periphery of the frame 50 such that a space between adjacent humidifier membrane cartridge modules is sealed and, in use, air leakage from the space is avoided. Thus, little or no pressure is lost as the air flow passes through two or more humidifier membrane cartridge modules seated in the humidifier housing.

The sealing member 58 may comprise two or more sealing members, i.e. two or more sides of the humidifier membrane cartridge module may have a sealing member coupled thereto. In some examples, each of the four sidewalls 54a, 54b, 54c, 54d of the first humidifier membrane cartridge module 28a may have sealing members coupled thereto. The sealing member may have any suitable configuration. For example, the sealing member may be a strip-shaped rubber gasket or a gasket having another shape and/or made from a different material. The sealing member of a humidifier membrane cartridge is configured so that it can sealably mate with a corresponding sealing member of an adjacent humidifier membrane cartridge. The seal may be created upon contact of the sealing members to one another, as, e.g., a service technician or another person is installing one or both of the adjacent humidifier membrane cartridge modules in the humidifier housing of the air processing unit. The sealing members e.g. gaskets may be compressible such that, as they are pressed against each other, they become coupled to one another and the seal is thereby created between the adjacent humidifier membrane cartridge modules.

During maintenance or service, e.g., when it is required to remove one or both of the humidifier membrane cartridge modules from the humidifier housing, the humidifier membrane cartridge modules may be disengaged from one another by e.g. pulling them apart to thereby break the seal between the gaskets and to bring them towards an opening in the humidifier housing. In some implementations, the humidifier membrane cartridge module may comprise or may be configured to engage with a pulling element or another feature or tool that can be pulled or otherwise manipulated to disengage the sealing members and thereby separate the humidifier membrane cartridge module from another humidifier membrane cartridge module to which it is coupled. The pulling element may be attached to a suitable location on the external frame of the humidifier membrane cartridge module. In some examples, the pulling element may be attached to the humidifier membrane cartridge module during maintenance or service.

In some examples, as shown in FIG. 5A, the sealing member 58 may comprise a first sealing member 58a coupled to or associated with the first sidewall 54a, a second sealing member 58b coupled to or associated with the second sidewall 54b, a third sealing member 58c coupled to or associated with the third sidewall 54c, and a fourth sealing member 58d coupled to or associated with the third sidewall 54d. The first sealing member 58a may be coupled to an outer perimeter of the frame 50 at or adjacent to four edges of the first sidewalls 54a, and the second sealing member 58b may be similarly coupled to an outer perimeter of the frame 50 at or adjacent to four edges of the second sidewall 54b. The third and fourth sealing members 58c, 58d may be similarly coupled to an outer perimeter of the frame 50 at or adjacent to edges of the third and fourth sidewalls 54c, 54d, respectively. The first, second, third, and fourth sealing members 58a, 58b, 58c, 58d may be separate from one another such that respective different features form a sealing member. In some examples, however, the sealing members 58a, 58b, 58c, 58d may share parts or portions of one another. For example, the first and second sealing members 58a, 58b may share a strip or other part at an edge el of the frame 50. In some examples, the sealing members 58a, 58b, 58c, 58d may be part of the same sealing structure.

The second and third humidifier membrane cartridge modules 28b, 28c may have similar sealing members 68, 78, respectively, which may similarly be formed by sealing members or features at each of the four vertical, in FIG. 5A, sidewalls of the humidifier membrane cartridge module. The respectively sealing members 68, 78 of the second and third humidifier membrane cartridge modules 28b, 28c are similar to the sealing member 58 of the first humidifier membrane cartridge module 28a. The sealing members 68, 78 are therefore not described in details herein and not all of their parts are labeled in FIG. 5A.

Thus, in some examples, each edge of a humidifier membrane cartridge module may have a sealing member. In this way, the humidifier membrane cartridge module may be flexible in its modularity such that the humidifier membrane cartridge module may be configured to be coupled to one or two other humidifier membrane cartridge modules in different orientations.

Furthermore, in some implementations, more than one row of humidifier membrane cartridge modules may be positioned in a humidifier housing of an air processing unit. In such implementations, more than two sides of a frame of the humidifier membrane cartridge module may be coupled to adjacent humidifier membrane cartridge modules.

The second and third humidifier membrane cartridge modules 28b, 28c may be configured similarly to the first humidifier membrane cartridge module 28a, and the elements or features shown in FIG. 5A in connection with the first humidifier membrane cartridge module 28a may therefore not be shown in connection with the second and third humidifier membrane cartridge modules 28b, 28c, for brevity.

Each of the first, second, third, and fourth sealing members 58a, 58b, 58c, 58d is configured to sealably mate with a corresponding sealing member of another humidifier membrane cartridge module. In the example shown in FIG. 5A, the humidifier membrane cartridge module 28a is a left-most humidifier membrane cartridge module, as viewed in FIG. 5A, such that it is the first membrane cartridge module that the air flow 34a from the air compressor encounters as the air flow 34a enters the humidifier housing having the humidifier membrane cartridge modules 28a, 28b, 28c installed therein. The air flow 34a first passes through the opening 56a in the first sidewalls 54a.

The third sidewall 54c of the first humidifier membrane cartridge module 28a is positioned so as to face a first side wall 64a of the second humidifier membrane cartridge module 28b comprising at least one sealing member 68. The third sealing member 58c of the first humidifier membrane cartridge module 28a, coupled to or associated with the third sidewall 54c, is configured to sealably mate with a corresponding sealing member 68 of the second humidifier membrane cartridge module 28b. Thus, as shown in FIG. 5A, the third sealing member 58c of the first humidifier membrane cartridge module 28a is configured to sealably mate with a first sealing member 68a of the second humidifier membrane cartridge module 28b that is coupled to or associated with the first side wall 64a of the second humidifier membrane cartridge module 28b. Similarly, the third sealing member 68c of the second humidifier membrane cartridge module 28b is configured to sealably mate with a first sealing member 78a of the third humidifier membrane cartridge module 28c.

In this way, the first, second, and third humidifier membrane cartridge modules 28a, 28b, 28c are reversibly coupled to one another using sealing members and together operate to dehumidify the exhaust flow expelled by the fuel cell stack and to respectively humidify the air acquired from the outside and compressed by the air compressor.

In FIG. 5A, the humidifier membrane cartridge modules are shown as having a rectangular cross-section. In some examples, humidifier membrane cartridge modules may have a circular, oval, or another cross-section.

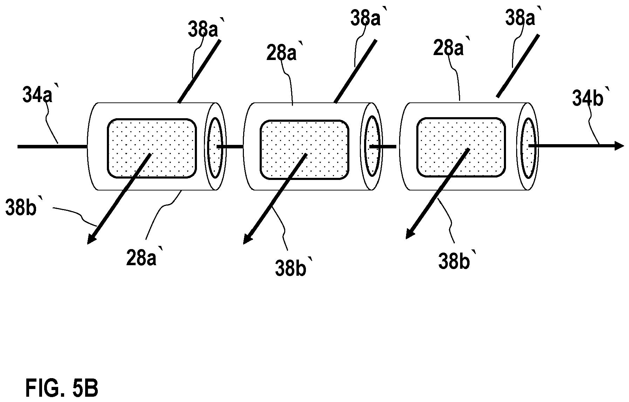

**FIG. 5B** is another schematic illustration of first, second, and third humidifier membrane cartridge modules 28a', 28b', 28c' having a generally circular cross-section across a longitudinal axis. The longitudinal axis may coincide with the direction of the air flow passing through the humidifier membrane cartridge modules the from the air compressor.

The first, second, and third humidifier membrane cartridge modules 28a', 28b', 28c' may be configured generally similar to first, second, and third humidifier membrane cartridge modules 28a, 28b, 28c of FIG. 5A.

FIG. 5B shows a first flow of compressed air 34a' received from the air compressor, the second flow of humidified compressed air 34b' that is supplied to the fuel cell stack, the third flow of exhaust air 38a' comprising steam received from the fuel cell stack, and the fourth flow of dehumidified exhaust air 38b' supplied to the exhaust system. Other elements of the first, second, and third humidifier membrane cartridge modules 28a', 28b', 28c' are not shown or described in connection with FIG. 5B, but it should be appreciated that each of the first, second, and third humidifier membrane cartridge modules 28a', 28b', 28c' has at least one sealing member. Each of the humidifier membrane cartridge modules 28a', 28b', 28c', when seated in a humidifier housing of an air processing unit, e.g., humidifier housing 23 of air processing unit 26, may be sealably mated to one or two adjacent humidifier membrane cartridge modules, via the sealing members.

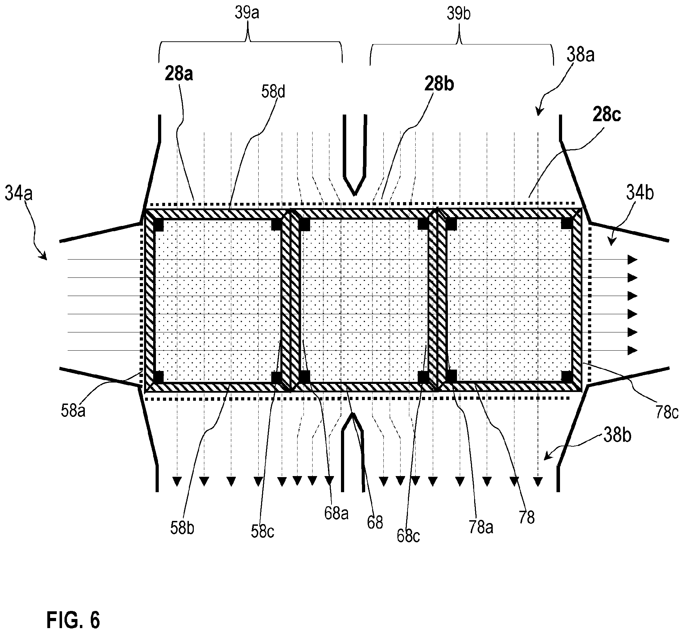

**FIG. 6** additionally shows a top view of the first, second, and third humidifier membrane cartridge modules 28a, 28b, 28c, where it is illustrated that the space between them is sealed. Thus, similarly to the example shown in FIG. 5A, the first humidifier membrane cartridge module 28a comprises first, second, third, and fourth sealing members 58a, 58b, 58c, 58d. The second and third humidifier membrane cartridge modules 28b, 28c comprise similarly configured sealing members 68, 78. The third sealing member 58c of the first humidifier membrane cartridge module 28a is sealably engaged with the first sealing member 68a of the second humidifier membrane cartridge module 28b, and the third sealing member 68c of the second humidifier membrane cartridge module 28b is sealably engaged with the first sealing member 78a of the third humidifier membrane cartridge module 28c.

FIG. 6 also shows schematically, by multiple arrows, the first flow of compressed air 34a, the second flow of humidified compressed air 34b, the third flow of exhaust air 38a, and the fourth flow of dehumidified exhaust air 38b. The third flow of exhaust air 38a and the fourth flow of dehumidified exhaust air 38b are shown, as an example only, to be split into two portions 39a and 39b. The humidifier housing 23 may be configured such that the exhaust air 38a entering the housing 23 via the second inlet port 36i may be split into two or more portions, e.g., similarly to a configuration of an engine inlet manifold. The splitting of the exhaust air 38a into the two, or in some cases more than two, portions may improve the passage of the air through the two or more humidifier membrane cartridge modules.

The dehumidified exhaust air 38b may also form two or more portions as it passes through the two or more humidifier membrane cartridge modules.

In some implementations, the air processing unit 26 may comprise two or more pressure sensors configured to measure a pressure of an airflow entering and exiting one or more of the humidifier membrane cartridge modules. The air pressure measurements acquired by the pressure sensors may be used to determine whether a cartridge module is aged, damaged, or otherwise compromised such that its air humidification performance deteriorates and a pressure differential across the membrane exceed a certain threshold.

Thus, referring back to FIG. 3, the air processing unit 26 may comprise, in the humidifier housing 23, a first pressure sensor 25a positioned so as to measure an air pressure of an airflow entering the first humidifier membrane cartridge module 28a of the two or more humidifier membrane cartridge modules 28a-28c and a second pressure sensor 25b positioned so as to measure an air pressure of an airflow exiting the first humidifier membrane cartridge module 28a. As shown in FIG. 3, the humidifier housing 23 may also comprise a third pressure sensor 25c positioned so as to measure an air pressure of an airflow entering the second humidifier membrane cartridge module 28b, a fourth pressure sensor 25d positioned so as to measure an air pressure of an airflow exiting the second humidifier membrane cartridge module 28b, a fifth pressure sensor 25e positioned so as to measure an air pressure of an airflow entering the third humidifier membrane cartridge module 28c, a sixth pressure sensor 25f positioned so as to measure an air pressure of an airflow exiting the third humidifier membrane cartridge module 28c. It should be noted that the membrane cartridge modules 28a-28c and pressure sensors 25a-25f, as well as other components, are drawn out of scale in FIG. 3, and that the membrane cartridge modules 28a-28c are positioned adjacent to one another so as to minimize loss in the air pressure as the air flow is passing through the membrane cartridge modules 28a-28c. Features such as e.g. gaskets may be used to seal the space between adjacent humidifier membrane cartridge modules.

The fuel cell assembly 20 comprises the fuel cell control unit or controller 40 that is configured to control operations of components of the fuel cell assembly 20. It should be noted that the fuel cell controller 40 may be positioned outside of the fuel cell assembly 20, e.g., outside of an enclosure (not shown) encompassing the fuel cell assembly 20.

The fuel cell controller 40 may comprise hardware, firmware, and/or software for performing methods according to examples of the present disclosure. In certain implementations, the controller 40 may be denoted a computer or computing device. The controller 40 may be constituted by one or more separate sub-units. The fuel cell controller 40 may be an electronic control unit and may comprise processing circuitry 42 such as one or more processors which are configured to execute a computer program code or computer-executable instructions for controlling operations of the fuel cell assembly 20. The computer-executable instructions may be stored in memory 44 of the controller 40. As shown in FIG. 3, the memory 44 may also store health status data or state of health values or indicators 46 for each of the humidifier membrane cartridge modules seated in the humidifier housing 23. The memory 44 may store other data, e.g., a number of operating hours of each of the humidifier membrane cartridge modules. The fuel cell controller 40 may keep track of how long one or more of the humidifier membrane cartridge modules has been operating.

The fuel cell controller 40 may be configured to communicate with the main vehicle controller 15 to receive instructions and information from the main vehicle controller 15. Furthermore, the fuel cell controller 40 may be configured to provide to the main vehicle controller 15 information regarding a health status of a humidifier membrane cartridge module of the two or more humidifier membrane cartridge modules that may be seated in the air processing unit 26. The main vehicle controller 15 may communicate the information about the health status of a humidifier membrane cartridge module, e.g., that the humidifier membrane cartridge module needs to be replaced. The information may be communicated to one or more of a driver of the vehicle 10, a service technician, an operator of a fleet when the vehicle 10 operates as part of the fleet, another remote controller, etc.

The fuel cell controller 40 may be configured to receive information from various sensors, including pressure sensors 25a-25f. After a certain period of use and/or if a damage or defect occurs, a membrane cartridge module becomes less efficient such that a pressure of the airflow that passes therethrough drops to a larger degree than desired. Thus, a pressure differential across the membrane cartridge module may be above a certain threshold. The processing circuitry 42 of the fuel cell controller 40 may be configured to determine a state of health of the first humidifier membrane cartridge module 28a using e.g. measurements acquired by the first and second pressure sensors 25a, 25b, determine a state of health of the second humidifier membrane cartridge module 28b using measurements acquired by the third and fourth pressure sensors 25c, 25d, and determine a state of health of the third humidifier membrane cartridge module 28c using measurements acquired by the fifth and sixth pressure sensors 25e, 25f.

In some examples, one sensor may be positioned between adjacent humidifier membrane cartridge modules and may be used to measure the air pressure of the air flow between the humidifier membrane cartridge modules. The pressure sensor may be positioned in any suitable location in association with the humidifier membrane cartridge modules.

The pressure sensors may be positioned so that they do not obstruct a procedure of removing a humidifier membrane cartridge module from the humidifier housing 23 and placing a new humidifier membrane cartridge module instead of the removed one. For example, in some examples, the pressure sensors may be positioned so that they may be moved out of the way when one or more of the humidifier membrane cartridge modules is being replaced with one or more new humidifier membrane cartridge modules. For example, the pressure sensors may be coupled to a support member that is configured to be reversibly moved to a position in which the support member with the sensor coupled thereto does not interfere with the replacement of the one or more humidifier membrane cartridge modules.

In some examples, the controller 40 and/or the main vehicle controller 15 may store other information relevant to the use of the humidifier membrane cartridge modules positioned in the humidifier housing 23. For example, it may be known when a new humidifier membrane cartridge module is installed in the humidifier housing 23, and a duration of time after which the humidifier membrane cartridge module is to be replaced may be known. For example, the controller 40 and/or the main vehicle controller 15 may keep track of a number of operating hours of the air processing unit, and it may be determined when to replace a humidifier membrane cartridge module i.e. after a certain number of the operating hours. A service technician or another person may thus be informed regarding which particular humidifier membrane cartridge module is to be replaced, and only that membrane cartridge module may be replaced.

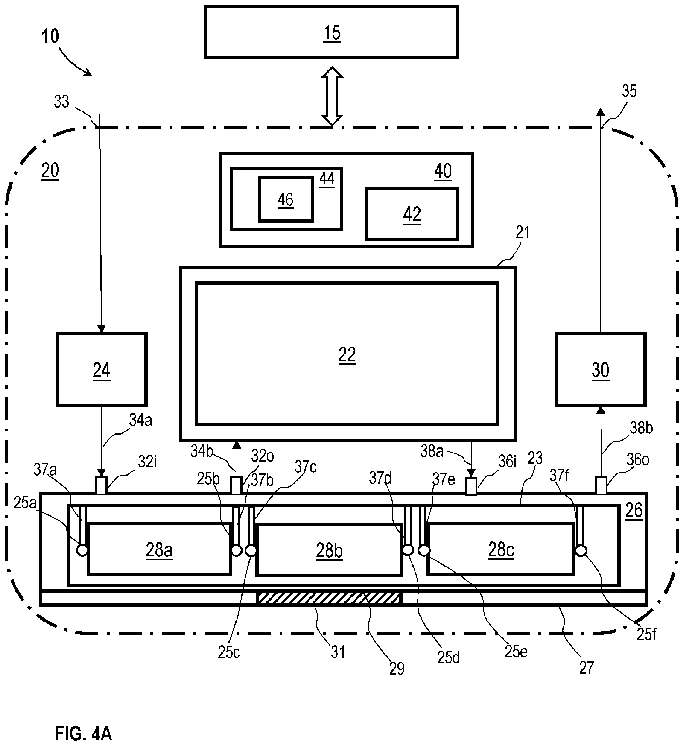

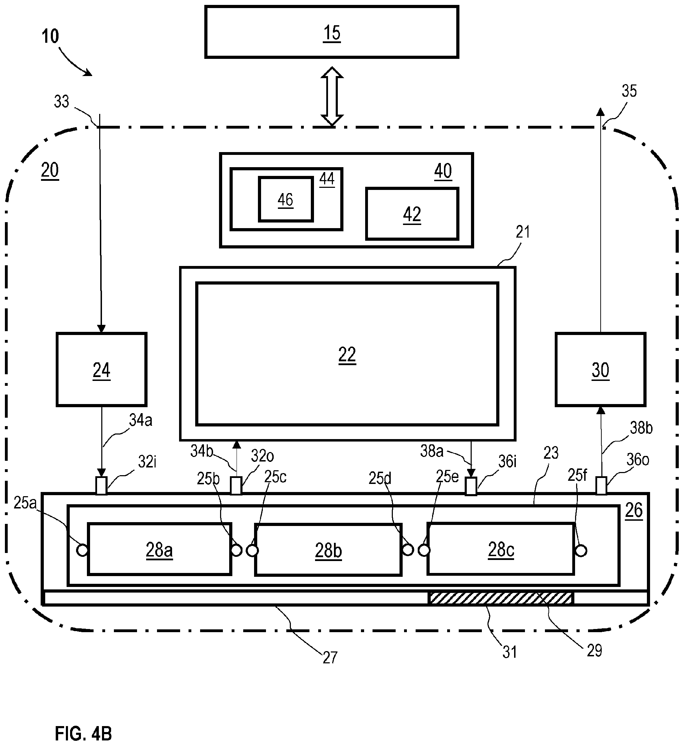

As mentioned above, a closable opening 29 formed in the cover 27 of the humidifier housing 23 of the air processing unit 26 may be positioned in different locations of the cover 27. **FIG. 4A** and **FIG. 4B** illustrate examples of different positions of the closable opening 29 in the cover 27, in accordance with examples of the present disclosure. FIGs. 4A and 4B illustrate the same fuel cell assembly 20 as shown in FIG. 3, and the description of components shown in FIGs. 4A and 4B is therefore not repeated. As shown in **FIG. 4A****,** the closable opening 29 may be formed at a location in the cover 27 that corresponds to a position of the second humidifier membrane cartridge module 28b when the second humidifier membrane cartridge module 28b is seated in the humidifier housing 23.

FIG. 4A also additionally illustrates that, as mentioned above, one or more of the pressure sensors may be positioned on a support member or arm in the humidifier housing 23. The support or arm may be movable so that the sensor may be moved out of the way when one or more of the humidifier membrane cartridge modules are being removed and replacement one or more humidifier membrane cartridge modules being installed. Thus, the first pressure sensor 25a is shown to be coupled to an arm 37a which may fixedly attached to e.g. a top, in the direction of gravity, inner wall of the humidifier housing and be movable e.g. like a pendulum or in another way that allows the first pressure sensor 25a to be temporarily moved to a position in which the sensor 25a does not interfere with the maintenance of the air processing unit 26, such as replacement of the one or more humidifier membrane cartridge modules. The arm 37a may be coupled to a position in the humidifier housing 23 in any suitable manner. FIG. 4A also shows that the second, third, fourth, fifth, and sixth pressure sensors 25b, 25c, 25d, 25e, 25f may similarly be coupled to corresponding arms 37b, 37c, 37d, 37e, 37f. It should be appreciated that the support member or arm having a pressure sensor coupled thereto may have any suitable configuration.

In some examples, the pressure sensors may be retained in the humidifier housing in any other manner.

Furthermore, in some examples, a humidifier membrane cartridge module may be associated with a pressure sensor, such that the pressure sensor is not attached to the humidifier housing 23.

In examples herein, each of the two or more humidifier membrane cartridge modules may be associated with corresponding two pressure sensors positioned and configured to measure air pressure of an air flow entering the module and an air flow exiting the humidifier membrane cartridge modules. The air flow entering the module may be either or both of the air flow from the air compressor or the wet air flow from the fuel cell stack such as from the cathode. The air flow exiting the module may be either or both of the air flow that is directed to the fuel cell stack or the air flow directed towards the exhaust system and that may be expelled to the outside.

**FIG. 4B** shows an example in which the closable opening 29 may be formed at a location in the cover 27 that corresponds to a position of the third humidifier membrane cartridge module 28c when the third humidifier membrane cartridge module 28c is seated in the humidifier housing 23. Like in the example of FIG. 3, the openings 29 in FIGs. 4A and 4B are shown as closable by the lid 31 which is configured to be opened to access the interior of the humidifier housing 23 and to be closed during operation of the fuel cell assembly 20 when the air processing unit 26 is in use. The lid 31, or any other suitable closing structure configured to reversibly close the opening 29, is configured to sealably close the opening so that there is no air leakage during use.

The closable opening 29, or more than one closable openings 29, may be formed in suitable locations in the cover 27. In some examples, the cover of the humidifier housing 23 may be configured such that each of the two or more humidifier membrane cartridge modules may be accessible via a corresponding separate opening. For examples, each of the three humidifier membrane cartridge modules 28a, 28b, 28c may be accessible via a corresponding closable opening 29 formed in the cover 27 that in this case has three closable openings. Because the techniques in accordance with the present disclosure allow identifying which of the three humidifier membrane cartridge modules 28a, 28b, 28c is to be replaced, only a corresponding opening will need to be accessed.

In any implementation in accordance with the present disclosure, a size, e.g. an area or another dimension, of the closable opening will be not large enough to simultaneously fit more than one more humidifier membrane cartridge modules therethrough.

Furthermore, regardless of the specific position of the closable opening 29 in the cover 27, when the air processing unit 26 is installed in the vehicle 10, the cover 27 with the closable opening 29 is positioned below the humidifier housing 23 in the direction of gravity. Thus, the closable opening 29 will be accessible for replacement of humidifier membrane cartridge modules from underneath the vehicle 10.

In addition, it should be noted that the air processing unit 26 shown in FIGs. 3 and 4B may have the pressure sensors coupled to a support member or arm as shown e.g. in FIG. 4A, or to a support structure having any other configuration.

The fuel cell controller 40 may be configured to communicate with the main vehicle controller 15 to receive instructions and information from the main vehicle controller 15. Furthermore, the fuel cell controller 40 may be configured to provide to the main vehicle controller 15 information regarding a health or status of each of humidifier membrane cartridge modules 28a-28c that may be seated in the air processing unit 26.

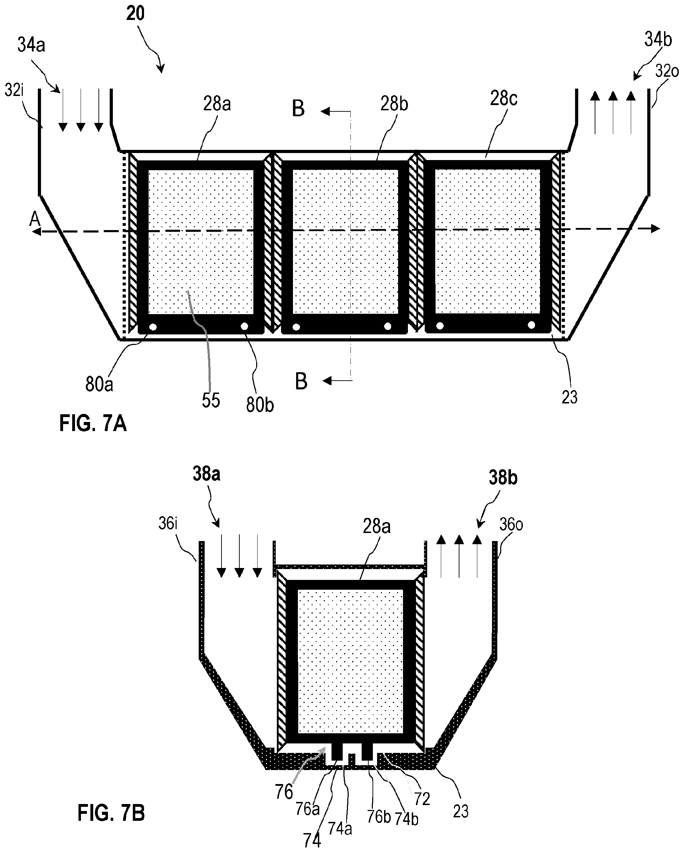

**FIGs. 7A** and **7B** additionally illustrate an example of first, second, and third humidifier membrane cartridge modules 28a, 28b, 28c in accordance with examples of the present disclosure. In **FIG. 7A****,** the humidifier membrane cartridge modules 28a-28c are shown in a cross-section along a longitudinal axis A of the humidifier housing 23 shown schematically in Fig. 7A. FIG. 7A illustrates that the humidifier membrane cartridge modules, as shown for the first humidifier membrane cartridge module 28a, may comprise one or more engagement elements shown by way of examples as engagement elements 80a, 80b. The second and third humidifier membrane cartridge modules 28b, 28c may comprise similar engagement elements which are not labeled in FIG. 7A and not separately discussed, but the description of the engagement elements 80a, 80b applies to the similar one or more engagement elements formed on other humidifier membrane cartridge modules. The humidifier membrane cartridge modules installed in the same fuel cell vehicle are typically identical modular units implemented in accordance with examples of the present disclosure.

The engagement elements 80a, 80b may be loops, hooks, tabs, slits, or any other engagement elements configured to be reversibly engaged with a hook or another pulling tool that may be used during servicing of the air processing unit 26 that involves replacing one or more of the humidifier membrane cartridge modules 28a, 28b, 28c with a replacement cartridge module. The hook or another pulling tool can be engaged with one or both of the engagement elements 80a, 80b and pulled or otherwise manipulated to take the humidifier membrane cartridge module 28a closer to the opening in the housing 23 and/or out of the housing 23. The hook or another pulling tool may assist in disengaging the sealing members whereby the humidifier membrane cartridge module 28a may be separated from engagement with one or more other humidifier membrane cartridge modules to which it is reversibly and sealably coupled in use.

The engagement elements 80a, 80b may be attached to, or otherwise formed on, e.g., a suitable position on the external frame of the humidifier membrane cartridge module 28a.

In **FIG. 7B****,** the first humidifier membrane cartridge module 28a is shown in a side cross section along a width of the humidifier housing, i.e. along an axis B, shown in FIG. 7A, that is orthogonal to the longitudinal axis A of the humidifier housing. The humidifier membrane cartridge module 28a is shown as a representative of the humidifier membrane cartridge modules 28a-28c and of any other humidifier membrane cartridge modules in accordance with examples of the present disclosure.

It should be noted that, even though pressure sensor such as e.g. pressure sensors 25a-25f of FIGs. 3, 4A, and 4B, are not shown in FIGs. 5A, 5B, 6, 7A, and 7B, two or more pressure sensors may be included in the humidifier housing to acquire sensor measurements of pressure of air flows entering and exiting each of the humidifier membrane cartridge modules seated in the humidifier housing.

In some examples herein, as mentioned above, the humidifier membrane cartridge modules may be slidably received within the humidifier housing 23. Thus, in some examples, the humidifier housing 23 may comprise features that facilitate the sliding of the membrane cartridge modules within the housing 23 during removal and/or insertion of the membrane cartridge modules into the housing 23. Thus, in some examples, an inner bottom wall 72 of the housing 23 may comprise at least one receiving feature configured to slidably retain the humidifier membrane cartridge modules by slidably engaging with at least one engagement member formed on each of the humidifier membrane cartridge modules.

In some examples, the at least one receiving feature may comprise at least one track 74, shown as first and second tracks 74a and 74b in FIG. 7B, that is configured to slidably retain the two or more humidifier membrane cartridge modules. The first and second tracks 74a and 74b may be in the form of recessed grooves formed along the longitudinal axis of the housing 23.

In the example shown in FIG. 7B, the tracks 74a, 74b are configured to slidably engage with at least one engagement member 76 formed on each of the humidifier membrane cartridge modules 28a, 28b, 28c. The at least one engagement member 76 may be in the form of first and second engagement members each 76a, 76b configured to slide within a respective track of the first and second tracks 74a, 74b. The first and second engagement members each 76a, 76b may be e.g. protrusions on the bottom wall of the frame of the humidifier membrane cartridge module 28a, wherein the protrusions are configured to slide within the tracks when the cartridge module 28a is installed within the housing 23 or is removed from the housing 23. The first and second protrusions 76a, 76b may be shaped and sized to fit the respective tracks in the manner that allows to slide the membrane cartridge module along the tracks and to retain the membrane cartridge module in the humidifier housing. The first and second protrusions 76a, 76b may be positioned differently at the bottom of the frame. For example, the first and second protrusions 76a, 76b may be spaced further apart from one another than as shown in FIG. 7B. The respective first and second tracks 74, 74b, may also be spaced differently, to slidably receive therein the protrusions 76a, 76b.

In some examples, the at least one engagement member 76 may be foldable. In some examples, the at least one engagement member 76 may be removable. In some examples, the at least one engagement member 76 may be both foldable and removable.

The receiving features such as e.g. recessed grooves or tracks in the housing 23, and corresponding engagement members of the cartridge module, may additionally facilitate positioning of the humidifier membrane cartridge modules within the humidifier housing 23 as well as alignment of the humidifier membrane cartridge modules with respect to one another.

The example of FIG. 7B shows two receiving features such as the tracks in the housing and two respective protrusions. In some examples, however, a single receiving feature and a respective single engagement member may be formed.

Furthermore, it should be appreciated that features other than tracks and corresponding engagement members in the form of protrusions may be used to allow a humidifier membrane cartridge module to be slidably received within the humidifier housing of the air processing unit. For example, the engagement members may be in the form of one or more wheels or other rolling elements. As another example, additionally or alternatively, the receiving features may be grooved protrusions. Other configurations are possible as examples of the present disclosure are not limited in this respect.

In some examples, the humidifier housing 23 may not include the receiving features and the humidifier membrane cartridge modules may not include engagement members.

In some examples, a method for determining when to replace a humidifier membrane cartridge module out of two or more humidifier membrane cartridge modules seated in a humidifier housing of an air processing unit installed in a fuel cell vehicle is provided. The method may be performed, e.g., by a fuel cell controller 40 and/or by the vehicle controller 15. The method may comprise receiving pressure sensor measurements acquired by one or more pressure sensors configured to measure air pressure of air flows respectively entering and exiting each of the two or more humidifier membrane cartridge modules; determining a state of health of the humidifier membrane cartridge module; generating an indication indicating the determined state of health of the humidifier membrane cartridge module; optionally determining whether a condition of the humidifier membrane cartridge module e.g. the determined state of health of the humidifier membrane cartridge module differs from an expected state of health of the humidifier membrane cartridge module; responsive to determining that the determined state of health of the humidifier membrane cartridge module differs from the expected state of health of the humidifier membrane cartridge module, generating an indication comprising an instruction to replace the humidifier membrane cartridge module; and sending the indication comprising an instruction to replace the humidifier membrane cartridge module, e.g., to the main vehicle controller 15 and/or to another device or system.

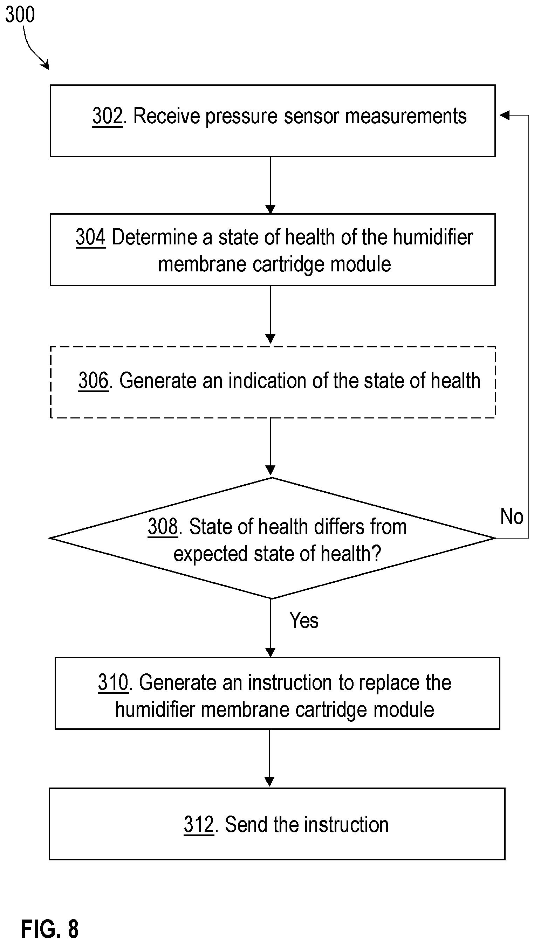

Thus, in some examples, as shown in **FIG. 8****,** a method or process 300 is provided for determining when to replace a humidifier membrane cartridge module out of two or more humidifier membrane cartridge modules seated in a humidifier housing of an air processing unit that is installed in the vehicle. The air processing unit may comprise a humidifier housing comprising a first inlet port configured to receive a first flow of compressed air, a first outlet port configured to provide a second flow of humidified compressed air to the fuel cell stack, a second inlet port configured to receive a third flow of exhaust air expelled from the fuel cell stack, and a second outlet port configured to provide a fourth flow of dehumidified exhaust air, the humidifier housing being configured to removably seat therein two or more humidifier membrane cartridge modules; and a removable cover configured to be coupled to the housing, the cover comprising at least one closable opening that is configured to be opened to provide access to an interior of the housing.

The method 300 may be performed by a control unit or controller e.g. by fuel cell controller 40 of the vehicle 10 shown in FIGs. 3, 4A, and 4B. Processing circuitry such as the processing circuitry 42 of the fuel cell controller 40 may perform the method or process 300.

It should be appreciated that the order of the processing in connection with blocks of FIG. 8 may differ from the order shown in FIG. 8. Optional processing is shown using dashed lines.

At **block 302,** the fuel cell controller 40 receives pressure sensor measurements acquired by one or more pressure sensors that measure air pressure of air flows respectively entering and exiting each of the two or more humidifier membrane cartridge modules.

Examples of pressure sensors 25a-25f are shown in FIGs. 3, 4A, and 4B. In some examples, the air processing unit comprises a first pressure sensor positioned so as to measure an air pressure of an airflow entering the humidifier membrane cartridge module of the two or more humidifier membrane cartridge modules and a second pressure sensor positioned so as to measure an air pressure of an airflow exiting the humidifier membrane cartridge module. With reference to FIGs. 3, 4A, and 4B, for the first humidifier membrane cartridge module 28a, the pressure sensor 25a may be taken as the first pressure sensor and the pressure sensor 25b may be taken as the second pressure sensor. Similarly, for the second humidifier membrane cartridge module 28b, the pressure sensor 25c may be taken as the first pressure sensor positioned so as to measure an air pressure of an airflow entering the second humidifier membrane cartridge module 28b, and the pressure sensor 25d may be taken as the second pressure sensor positioned so as to measure an air pressure of an airflow exiting the second humidifier membrane cartridge module 28b. Similarly, for the third humidifier membrane cartridge module 28c, the pressure sensor 25e may be taken as the first pressure sensor positioned, and the pressure sensor 25f may be taken as the second pressure sensor.

Furthermore, in some examples, a single pressure sensor may be positioned between adjacent humidifier membrane cartridge modules, in which case measurements acquired by that pressure sensor are indicative of both an air pressure of an airflow existing one membrane cartridge module and an air pressure of the same airflow that enters another, adjacent membrane cartridge module.

A suitable number of pressure sensors may be used, and the pressure sensor may be positioned or mounted in any suitable location relative to each respective humidifier membrane cartridge module. The pressure sensor measurements comprise, for each humidifier membrane cartridge module, an air pressure of an air flow entering that membrane cartridge module and an air pressure of an air flow that has passed through the membrane cartridge module and is exiting the membrane cartridge module.

The pressure sensor measurements may be acquired continuously, periodically, and/or at certain time intervals.

At **block 304,** the fuel cell controller 40 determines a condition e.g. a state of health of the humidifier membrane cartridge module. The state of health of the humidifier membrane cartridge module may be determined in various ways. In some examples, the state of health may be determined using measurements acquired by pressure sensors, e.g., by the first and second pressure sensors associated with the humidifier membrane cartridge module.

In some examples, the state of health may be determined by determining a pressure differential across the humidifier membrane cartridge module and comparing the pressure differential to a certain threshold pressure differential.

As discussed herein, a humidifier membrane cartridge module may receive respective air flows from the air compressor and from the fuel cell stack. The compressed air flow from the air compressor is humidified as it passes through the humidifier membrane cartridge module and a resulting humidified air flow exits the humidifier membrane cartridge module to be directed to the cathode side of the fuel cell stack. Also, the wet exhaust flow discharged by the fuel cell stack is passed through the humidifier membrane cartridge module, and the moisture in the exhaust flow are used to humidify the compressed, and typically dry, air received from the air compressor. The resulting dehumidified exhaust air flow exits the humidifier membrane cartridge module. Regardless of specific positions and types of pressure sensors used, the pressure sensor measurements allow assessing or determining a pressure differential across the humidifier membrane cartridge module.

The fuel cell controller 40 may compare the pressure differential across the humidifier membrane cartridge module to a certain threshold pressure differential. The fuel cell controller 40 may thus determine whether the pressure differential is above or exceeds the certain threshold pressure differential. The threshold pressure differential may be a predetermined threshold - e.g., it may be known what pressure differential is expected from the humidifier membrane cartridge module given its current age. It may be known to what extent a pressure across the membrane body of the humidifier membrane cartridge module is expected to decrease with time, as the humidifier membrane cartridge module is aging due to its use. The age of the humidifier membrane cartridge module may be monitored, such that the fuel cell controller 40 may keep track of how much has passed since the humidifier membrane cartridge module had been installed in the air processing unit installed in the vehicle. For example, a number of operating hours of the humidifier membrane cartridge module may be monitored. Depending on the age of the humidifier membrane cartridge module, different values of the threshold pressure differential may be used. If it is determined that a value of the threshold pressure differential is exceeded, this may be indicative of excessive deterioration, damage, or another undesirable change in the membrane cartridge module.

Accordingly, the state of health of the humidifier membrane cartridge module may be determined based on whether or not the pressure differential across the membrane body of the cartridge module exceeds a corresponding threshold pressure differential.

In some examples, the state of health of the humidifier membrane cartridge module may be determined using only measurements acquired from the second pressure sensor which is, in connection with the description of the process 300, is the pressure sensor positioned and configured to measure an air pressure of the air flow exiting the humidifier membrane cartridge module. If the measurements of such air flow deviate from certain threshold pressure that is expected given the age of the humidifier membrane cartridge module, this may be indicative of the decreased health of the humidifier membrane cartridge module.

In some examples, the state of health of the humidifier membrane cartridge module may be determined based on an age or operating hours of the humidifier membrane cartridge module. It may be known e.g., stored in memory of the fuel cell controller and/or in another memory, when the humidifier membrane cartridge module was installed. A number of operating hours of the humidifier membrane cartridge module may also be known. Thus, in some examples, the fuel cell controller 40 and/or the main vehicle controller 15 may keep track of a number of operating hours of the air processing unit, and it may be determined when to replace a humidifier membrane cartridge module i.e. after a certain number of the operating hours.

The state of health of the humidifier membrane cartridge module may be a numerical value, a qualitative value, or a combination thereof. Two or more different values may be used to define a state of health of a particular humidifier membrane cartridge module.

The determined state of health of the humidifier membrane cartridge module may be stored, e.g. in memory 44 of the fuel cell controller 40. For example, as shown in FIG. 3, the memory 44 of the fuel cell controller 40 may store state of health values 46 determined for each of the humidifier membrane cartridge modules installed in the air processing unit. The state of health values may be updated as further sensor measurements are acquired and as the humidifier membrane cartridge module continues being used.

At **block 306,** the fuel cell controller 40 may generate an indication indicating the determined state of health of the humidifier membrane cartridge module. This step may be optional. The indication indicating the determined state of health may be provided to the main vehicle controller 15 and/or to another device or system. In some examples, the indication indicating the determined state of health may be presented to a driver of the vehicle, e.g., on a vehicle's dashboard, a mobile device of the driver in operative communication with the main vehicle controller 15, and/or on another device. In addition or alternatively, the indication indicating the determined state of health may be communicated to a device accessible by a service personnel e.g. a service technician, to a fleet controller, and/or to another device or system configured to monitor a status of the vehicle and its components including the air processing unit.

At decision **block 308,** the fuel cell controller 40 may determine whether the determined state of health of the humidifier membrane cartridge module differs from an expected state of health of the humidifier membrane cartridge module. The determined state of health may be different from an expected state of health when the determined or actual state of health of the humidifier membrane cartridge is below the expected state of health of that humidifier membrane cartridge, given an age of the humidifier membrane cartridge.

In examples in which the state of health may be expressed using at least one qualitative value, the qualitative value representing the determined or actual state of health may be different than a qualitative value representing an expected state of health of that humidifier membrane cartridge, given an age of the humidifier membrane cartridge.

The fuel cell controller 40 may determine whether the determined state of health of the humidifier membrane cartridge module differs from the expected state of health of the humidifier membrane cartridge module in various other ways. The expected state of health may be in the form of a range of values, and, if the determined actual state of health falls within that range, the fuel cell controller 40 may decide that the determined state of health of the humidifier membrane cartridge module does not differ from the expected state of health for that humidifier membrane cartridge module. Some deviation from the expected state of health may be allowed.

Responsive to determining that the determined state of health of the humidifier membrane cartridge module does not differ from the expected state of health of that humidifier membrane cartridge module, the process 300 may return to block 302, as shown in FIG. 8. Further pressure sensor measurements may be acquired and the fuel cell controller 40 continues to monitor the state of health of the humidifier membrane cartridge module. The process 300 may be performed continuously, and the determined state of health values may be updated as they are recalculated based on more recently acquired pressure sensor measurements.

At **block 310,** responsive to determining that the determined state of health of the humidifier membrane cartridge module differs from the expected state of health of the humidifier membrane cartridge module, the fuel cell controller 40 may generate an indication comprising an instruction to replace the humidifier membrane cartridge module.

At **block 312,** the fuel cell controller 40 may send the indication comprising the instruction to replace the humidifier membrane cartridge module, e.g., to the main vehicle controller 15 and/or to another device or system. The processing at block 312 may be performed as part of the processing at block 310.

The indication comprising the instruction to replace the humidifier membrane cartridge module may be presented to a driver of the vehicle, e.g., on a vehicle's dashboard, a mobile device of the driver in operative communication with the main vehicle controller 15, and/or on another device. In addition or alternatively, the instruction to replace the humidifier membrane cartridge module may be communicated to a device accessible by a service personnel, to a fleet controller, and/or to another device or system configured to monitor a status of the vehicle and its components including the air processing unit.

Regardless of the specific way in which the indication comprising the instruction to replace the humidifier membrane cartridge module is communicated by the fuel cell controller 40, information about the need to replace the humidifier membrane cartridge module may be communicated to a suitable person.

Furthermore, in some examples, a state of health of the humidifier membrane cartridge module may be determined based on a duration of use of the humidifier membrane cartridge module. In some examples, pressure sensor measurements may not be acquired or they may not be used. In some circumstances, one or more of the pressure sensors may malfunction such that pressure sensors measurements may not be available. In such examples, the state of health of the humidifier membrane cartridge module may be determined based on the current age of the membrane cartridge module. An indication indicating one or more of the state of health of the humidifier membrane cartridge module and an instruction to replace the humidifier membrane cartridge module may be generated, when the state of health of the humidifier membrane cartridge module differs from an expected state of health of the humidifier membrane cartridge module, as described in connection with blocks 310 and 312 of FIG. 8.

The process 300 may be performed such that for each humidifier membrane cartridge module out of two or more humidifier membrane cartridge modules installed in the vehicle's air processing unit, it may be determined when it is time to replace that humidifier membrane cartridge module.

In examples in accordance with the present disclosure, the humidifier membrane cartridge modules may be replaced individually. For example, if only one humidifier membrane cartridge module out of two or more humidifier membrane cartridge modules needs to be replaced, as determined by the fuel cell controller 40, that cartridge module will be replaced.

In accordance with examples of the present disclosure, a number of smaller humidifier membrane cartridge modules is used that are individually replaceable, instead of a use of a single bigger and typically more expensive membrane. A smaller number of vehicle components may need to be removed from the vehicle to gain access to the humidifier housing including the two or more membrane cartridge modules. This may provide advantages such as easier, less costly, and faster service and maintenance of the air processing unit. In some implementations, the air processing unit may be configured and positioned such that there may be no need to remove any components to gain access to its humidifier housing to change a humidifier membrane cartridge module. Furthermore, a state of health each of the two or more humidifier membrane cartridge modules may be monitored and used to determine, with improved precision, when to replace each of the humidifier membrane cartridge modules. Thus, the configuration of the air processing unit and of the humidifier membrane cartridge modules in accordance with aspects of the present disclosure may greatly improve serviceability and reduce costs of maintenance and repair of the air processing unit of the vehicle. In this way, overall costs of vehicle maintenance may be reduced, such that fleet maintenance costs may be reduced in some cases.

The fuel cell controller 40 may include various units for performing the processing at blocks of FIG. 8. Those skilled in the art will appreciate that the fuel cell controller 40 and units of the fuel cell controller 40 may refer to a combination of analogue and digital circuits, and/or one or more processors that may be configured with software and/or firmware that, when executed by the respective one or more processors, may carry out the actions or steps of the method(s) in accordance with the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A fuel cell assembly (20) for a fuel cell vehicle (10), comprising:
an enclosure (21) comprising a fuel cell stack (22);
an air processing unit (26) comprising:
a humidifier housing (23) comprising a first inlet port (32i) configured to receive a first flow (34a) of compressed air, a first outlet port (32o) configured to provide a second flow (34b) of humidified compressed air to the fuel cell stack, a second inlet port (36i) configured to receive a third flow (38a) of exhaust air expelled from the fuel cell stack, and a second outlet port (36o) configured to provide a fourth flow (38b) of dehumidified exhaust air, the humidifier housing being configured to removably seat therein two or more humidifier membrane cartridge modules (28a, 28b, 28c); and
a removable cover (27) configured to be coupled to the housing (23), the cover comprising at least one closable opening (29) that is configured to be opened to provide access to an interior of the housing (23); and
a fuel cell controller (40) comprising processing circuitry (42) configured to monitor and control operation of the fuel cell assembly.

2. The fuel cell assembly of claim 1, wherein the humidifier housing (23) comprises the two or more humidifier membrane cartridge modules (28a, 28b, 28c), wherein each of the humidifier membrane cartridge modules (28a, 28b, 28c) is removable and replaceable.

3. The fuel cell assembly of claim 1 or claim 2, wherein each of the humidifier membrane cartridge modules (28a) comprises:
an exterior frame (50) having enclosed top and bottom walls (52a, 52b), and sidewalls (54a, 54b, 54c, 54d) each having a corresponding opening;
a membrane body (55) positioned inside the exterior frame such that the membrane body is exposed through the openings in the sidewalls of the exterior frame; and
at least one sealing member (58a, 58b, 58c, 58d) disposed around at least a portion of an outer perimeter of the exterior frame, the sealing member being configured to sealably mate with a corresponding sealing member (68a, 68b, 68c, 68d) of another humidifier membrane cartridge module (28b) of the at least two humidifier membrane cartridge modules.

4. The fuel cell assembly of any one of claims 1 to 3, wherein an inner bottom wall (72) of the housing comprises at least one receiving feature (74) configured to slidably engage with at least one engagement member (76) formed on each of the humidifier membrane cartridge modules.

5. The fuel cell assembly of any one of claims 1 to 4, wherein the air processing unit comprises a first pressure sensor (25a) positioned so as to measure an air pressure of an airflow entering a humidifier membrane cartridge module (28a) of the two or more humidifier membrane cartridge modules and a second pressure sensor (25b) positioned so as to measure an air pressure of an airflow exiting the humidifier membrane cartridge module (28a).

6. The fuel cell assembly of any one of claims 1 to 5, wherein the processing circuitry of the controller is configured to determine a state of health of the humidifier membrane cartridge module, optionally using measurements acquired by the first and second pressure sensors.

7. The fuel cell assembly of claim 6, wherein the processing circuitry of the controller is configured to generate an indication indicating one or more of the state of health of the humidifier membrane cartridge module and an instruction to replace the humidifier membrane cartridge module when the state of health of the humidifier membrane cartridge module differs from an expected state of health of the humidifier membrane cartridge module.

8. The fuel cell assembly of any one of claims 1 to 7, wherein the air processing unit is positioned below the enclosure (21) comprising the fuel cell stack (22).

9. A fuel cell vehicle (10), comprising:
a fuel cell assembly (20) comprising:
an enclosure (21) comprising a fuel cell stack (22);
an air processing unit (26) comprising:
a humidifier housing (23) comprising a first inlet port (32i) configured to receive a first flow (34a) of compressed air, a first outlet port (32o) configured to provide a second flow (34b) of humidified compressed air to the fuel cell stack, a second inlet port (36i) configured to receive a third flow (38a) of exhaust air expelled from the fuel cell stack, and a second outlet port (36o) configured to provide a fourth flow (38b) of dehumidified exhaust air, the humidifier housing being configured to removably seat therein two or more humidifier membrane cartridge modules (28a, 28b, 28c); and
a removable cover (27) configured to be coupled to the housing (23), the cover (27) comprising at least one closable opening (29) that is configured to be opened to provide access to an interior of the housing; and
a fuel cell controller (40) comprising processing circuitry (42) configured to monitor and control operation of the fuel cell assembly.

10. The fuel cell vehicle of claim 9, wherein the humidifier housing (23) comprises the two or more humidifier membrane cartridge modules (28a, 28b, 28c), wherein each of the humidifier membrane cartridge modules (28a, 28b, 28c) is removable and replaceable.

11. The fuel cell vehicle of claim 9 or 10, wherein each (28a) of the humidifier membrane cartridge modules comprises:
an exterior frame (50) having enclosed top and bottom walls (52a, 52b), and sidewalls (54a, 54b, 54c, 54d), each having a corresponding opening;
a membrane body (55) positioned inside the exterior frame (50) such that the membrane body is exposed through the openings in the sidewalls of the exterior frame; and
at least one sealing member (58a, 58b, 58c, 58d) disposed around at least a portion of an outer perimeter of the exterior frame, the sealing member being configured to sealably mate with a corresponding sealing member (68a, 68b, 68c, 68d) of another humidifier membrane cartridge module (28b) of the at least two humidifier membrane cartridge modules.

12. The fuel cell vehicle of any one of claims 9 to 11, wherein the air processing unit comprises a first pressure sensor (25a) positioned so as to measure an air pressure of an airflow entering a humidifier membrane cartridge module (28a) of the two or more humidifier membrane cartridge modules and a second pressure sensor (25b) positioned so as to measure an air pressure of an airflow exiting the humidifier membrane cartridge module (28b).

13. The fuel cell vehicle of claim 12, wherein the processing circuitry of the fuel cell controller is configured to:
determine a state of health of the humidifier membrane cartridge module, optionally using measurements acquired by the first and second pressure sensors; and
generate an indication indicating one or more of the state of health of the humidifier membrane cartridge module and an instruction to replace the humidifier membrane cartridge module when the state of health of the humidifier membrane cartridge module differs from an expected state of health of the humidifier membrane cartridge module.

14. The fuel cell vehicle of any one of claims 9 to 13, wherein the air processing unit (26) is positioned below the enclosure (21) comprising the fuel cell stack (22).

15. An air processing unit (26) configured to be installed in a fuel cell vehicle (10) for processing air delivered to a fuel cell stack (22) of a fuel cell assembly (20), the air processing unit (26) comprising:
a humidifier housing (23) comprising a first inlet port (32i) configured to receive a first flow (34a) of compressed air, a first outlet port (32o) configured to provide a second flow (34b) of humidified compressed air to the fuel cell stack, a second inlet port (36i) configured to receive a third flow (38a) of exhaust air expelled from the fuel cell stack, and a second outlet port (36o) configured to provide a fourth flow (38b) of dehumidified exhaust air, the humidifier housing being configured to removably seat therein two or more humidifier membrane cartridge modules (28a, 28b, 28c); and
a removable cover (27) configured to be coupled to the housing (23), the cover comprising at least one closable opening (29) that is configured to be opened to provide access to an interior of the housing (23).
